# EUROPEAN PATENT APPLICATION

(11) **EP 3 316 496 A1**
(43) Date of publication of application: **02.05.2018**
(21) Application number: 16195492.0
(22) Date of filing: 25.10.2016
(51) Int. Cl.: H04B 10/077

(54) **SOFTWARE DEFINED OPTICAL NETWORK**

(71) Applicant: Xieon Networks S.à r.l., 2633 Senningerberg (LU)
(72) Inventor: Fonseca, Daniel, 1990-296 Lisbon (PT)
(74) Representative: Lucke, Andreas

(57) **Abstract**

A method of monitoring a software defined optical network is proposed, the optical network comprising a number of optical network nodes connected via optical links, the method including: remotely controlling a first node to send a test light signal to a second node; remotely configuring the second node to generate a predetermined response to the test light signal when the second node receives the test light signal; detecting whether a response is received; and processing the detection result to derive information relating to the operating condition of at least one of the first node and the second node.

## Description

### Background

This disclosure relates to software defined optical networks, in general, and more particularly to a method of monitoring optical network elements in a software defined optical network and to a respective control system.

Software defined networking (SDN) enables programmable SDN control and management functions at a number of layers, allowing applications to control network resources or information across different technology domains, and across different network element families. SDN combined with optical transport technologies enables customizing the optical network infrastructure dynamically wherein a unified control plane architecture can be used. Generally speaking, software defined networking (SDN) is defined as a control framework that supports programmability of network functions and protocols by decoupling the data plane and the control plane. The control plane may include a central SDN controller or a distributed SDN control architecture that can be used to manage an entire telecommunication network. The control plane can use algorithms which span multiple (optical) network element families which do not need to be compatible at the data plane level. The data plane refers to the network element control plane level. The SDN controller just needs access to the basic monitoring and/or configuration functionalities of the network elements. This SDN architecture hence decouples the control and data planes, enabling the network control to become directly programmable and the underlying infrastructure to be abstracted for applications and network services.

Currently, conventional control plane architectures do not possess means to keep an accurate view of transmission conditions. For example, the transmission conditions of the optical data plane used for optical physical section (OPS) and optical transmission section (OTS) according to ITU-T G709 are not monitored or supervised. In some cases, information gathered by the control plane may be received from an offline planning tool used at the time of designing the optical network and/or may be based on previously measured information which might be out-of-date at the time when it is needed. In other cases, existing connectivity

(e.g. optical channels) may be checked at the network element level based on current data traffic, but this does not provide an overall network view. In other cases, there might be a lack of compatibility between optimization methods of different network element families in the optical network which limits the utility of monitoring and optimization methods and does not enable a transparent overall network solution.

It is desired to provide a method of monitoring a software defined optical network and a software defined optical network control system which can verify connectivity and operating states of the optical network elements within the network online and without the use of any specialized measuring equipment.

### Summary

This object is solved by a method of monitoring a software defined optical network according to claim 1 and by a software defined optical network control system according to claim 12. Some embodiments are described in the dependent claims

In one aspect, a method of monitoring a software defined optical network is provided, the optical network comprising a number of optical network nodes connected by optical links, the method including: remotely controlling a first node to send a test light signal to a second node; remotely configuring the second node to generate a predetermined response to the test light signal when the second node receives the test light signal; detecting whether a response is received; and processing the detection result to derive information relating to an operating condition of at least one of the first node and the second node.

The method provides a simple means for verifying connectivity and operating states of an optical element at an optical network node even if the optical network node currently is not used by an optical channel and no specialized measuring equipment is attached to the optical node. The method can use basic optical functionalities of optical network elements, also referred to as "atomic functions" or "primitives", to generate, route, and gather light signals to determine connectivity and operating states of optical network elements which currently are or are not participating in data traffic. These atomic functions are implemented on the network element and can comprise activating a laser source of an optical network element, controlling an optical component to generate light, direct light, divert light, reflect light, detect light, etc. In one example, these atomic functions can be regarded as the building blocks or most basic actions which the optical network element can perform. The method also can use more complex functionalities. These functionalities can be triggered remotely and any response can be gathered and processed remotely to determine the connectivity and operating conditions of one or more optical elements in the optical network. Performing such processes "remotely" refers to performing the processes at an entity remote from the respective optical network elements, such as at an SDN controller.

In different embodiments, the first node can be used as a source node and either one of the first and second nodes or both the first node and the second node can be configured as a node under test. The first node and the second node can be coupled directly or can be coupled indirectly via a number of additional nodes.

In different embodiments, the predetermined response may comprise at least part of the test light signal which is returned from the second node. For example, the second node may comprise an optical wavelength selective switch, WSS, having an Add/Drop structure wherein cross connections of the WSS are configured remotely to forward or return at least part of the optical test signal.

In different embodiments, the detected response can be processed at the first node and the information relating to the operating condition can be retrieved from the first node at an SDN controller. In other embodiments, the detected response can be processed at the second node or a further node and the information relating to the operation condition can be retrieved from said second node or said further node.

In different embodiments, the SDN controller may process the information relating to the operating condition and determine a status of at least one of the first node and the second node and/or any intervening nodes.

In different embodiments, the SDN controller may identify an atomic function to determine an operating state of at least one of the first node and the second node and further may identify at least one optical network node capable of performing the atomic function.

Examples of the atomic function comprise at least one of generating a light signal, detecting receipt of a light signal, detecting loss of signal, creating a connection between two optical network elements, creating an internal port connection for the node connectivity, e.g. an internal path from an internal network element component to a network element port, directing a light signal, splitting a light signal, diverting a light signal, amplifying a light signal, measuring an optical power of a received light signal.

An "atomic function" can be considered a building block or most basic action which the optical network element is configured to perform or can be controlled to perform, e.g. a non-complex functionality or functionality which cannot be broken down further. It is undividable in terms of functionality. In the International Telecommunication Union (ITU)-T Standard .806, an atomic function is defined as a "function that, if divided into simpler functions, would cease to be uniquely defined for digital transmission hierarchies. It is, therefore, invisible from a network point of view".

For example, a connection function can be an atomic function within a layer which, if connectivity exists, relays information items between groups of atomic functions. It does not modify the members of these information items. An atomic function can be described by the process within the function, its reference points and the information flow via these reference points. A simple example of an atomic function is switching on and off a light source, outputting a light signal, receiving a light signal, measuring a light signal, or the like. A "non-atomic function" would be one which comprises more complex functions, such as receiving a light signal and generating a reaction in response thereto.

In another aspect, a software defined optical network control system is provided, the system comprising: an SDN control architecture in communication with a number of optical network elements connected by optical links, each optical network element located at a network node in communication with the SDN control architecture; wherein the SDN control architecture comprises a configuration module to issue configuration commands to the optical network elements, to control an optical network element located at a first node to send a test light signal from the first node to an optical network element located at a second node and to configure the optical element located at the second node to generate a response to the test light signal; and further comprises a processing module to receive and process from the optical network information relating to the operating condition of at least one of the optical network elements located at the first node and the second node, the information relating to the operating condition being generated based on the response.

In different embodiments, the SDN control architecture further may comprise an identification module configured to identify optical network elements and their capabilities in the optical network.

In different embodiments, the SDN control architecture may be configured to identify a atomic function to determine an operating condition and further identify at least one optical network element capable of performing the atomic function.

In different embodiments, the SDN controller further may comprise a path calculation module configured to determine an optical signal path through the optical network based on the information received and processed in the processing module.

The SDN control architecture may comprise a centralized SDN controller, also referred to as control plane, and can be used to maintain an overall view of the operating states of the optical network elements in the software defined optical network. This overall view may include information concerning the optical network elements deployed in the network and their connectivity, the information including one or more of: an indication if an optical network element processes an expected functionality, whether an optical network element is working as expected, whether an optical network element is connected as expected, and, if this is not the case, which part of the connection may be disturbed. More generally speaking, the control plane can maintain a configuration matrix of the optical network and can determine which parts of the configuration matrix operates properly in which one does not. If failure of an optical network element or no connectivity is detected, an alarm can be generated. As a consequence, an optimized occupation of network resources as well as transmission conditions along the network can be maintained. Information concerning the state of connections (e.g. operation states, alarms, configurations, etc.), current performance data (e.g. measured bit error rate, number of drop packets, etc.) among others can be retrieved in real time, and provided to the centralized control plane (i.e. the SDN controller) in order to evaluate what reactions may be recommended for an affected service.

As described in further detail with reference to the following examples, the control architecture SDN controller can acquire a deep knowledge of transmission conditions of the data plane (network elements) and signals being transmitted over the data plane in order to compute optimum routes using a path computation element (PCE), for example, and make the adjustments in case the transmission conditions change, e.g. due to external factors (e.g. temperature variations, fluctuations arising from component behavior variations, etc.). This enables achieving optimum utilization of network resources.

### Brief Description of Drawings

Various examples are described with reference to the drawings for illustrating the software defined optical network (optical SDN), its monitoring method and control system of the present disclosure.
- Fig. 1: shows a schematic overview of a software defined optical network, according to one example;
- Fig. 2: shows a schematic block diagram of a number of optical network nodes and their connections, according to one example;
- Fig. 3: shows a flow diagram of a method according to one example.
- Fig. 4: shows an example of a setup for verifying optical connectivity between network elements and/or intra-node connectivity, where a light source and/or a light detector are implemented in a remote network element for a test scenario in a route under test.
- Fig 5: shows an alternative setup for an intra-node connectivity test, where the network element under test does not have a light source and/or a light detector

### Detailed Description of Examples

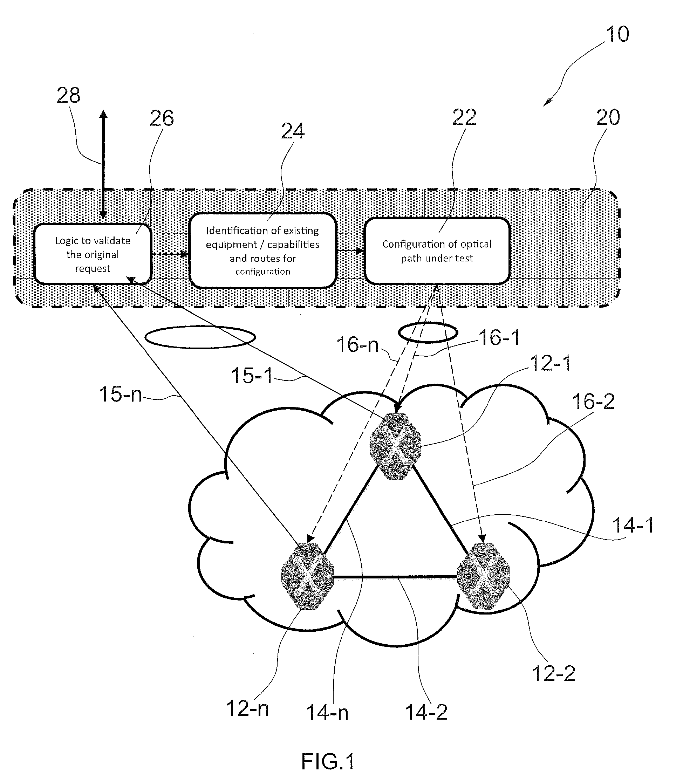

Fig. 1 shows a schematic overview of a software defined optical network 10, according to one example. The network comprises an SDN controller 20, also referred to as control plane, which can have a centralized or distributed SDN control architecture. An example of the SDN controller is the Coriant Transcend™ SDN Transport Controller of the applicant.

The network further comprises a number of optical network elements 12-1, 12-2, 12-3, in the following commonly referred to as optical network elements 12. Whereas, for the sake of clarity, only three optical network elements are shown in fig. 1, an optical network usually will comprise a larger number of optical network elements, and a plurality of different types of optical network elements, including but not limited to: laser and/or LED light sources, multiplexer/demultiplexers, including optical Add/Drop multiplexers (OADM) and reconfigurable optical Add/Drop multiplexers (ROADM), optical switches, including wavelength selective switches (WSS), which direct light between ports without optical-electrical-optical conversion, optical splitters to send a light signal on different optical fiber paths, circulators, and optical amplifiers. The optical network elements 12 can be from different network element families, such as elements of the hiT 7300 7100, and mTera packet optical transport systems provided by the applicant.

The optical network elements 12 are connected via optical fibers 14-1, 14-2, 14-3, commonly referred to as optical fibers 14 which can be single mode and/or multi mode optical fibers. Each optical network element 12 may define a network node, wherein a network node can contain one or more network elements, usually installed in the same physical location

The SDN controller 20 can communicate with the optical network elements 12, via wireless or wired data communication channels 16-1, 16-2, 16-3, commonly referred to as communication channel 16. In the example of fig. 1, there is a direct data communication channel 16 between the SDN controller 20 and each one of the optical network elements 12. In other examples, communication between the SDN controller 20 and some or all of the optical network elements 12 can be channeled through intermediate communication stations, such as repeaters, and/or other optical network elements. The SDN controller 20 may be configured to communicate with all or with a group of optical network elements within the optical network.

In the example of fig. 1, the SDN controller 20 comprises a configuration module 22, an identification module 24, and a processing module 26.

The processing module 26 receives a request for performing a test, such as for verifying optical connectivity between network elements and/or intra-node connectivity, via communication link 28. Link 28 can be a wireless or wired connection. The processing module can distinguish between at least two types of test scenarios: inter-node connectivity, where the purpose of test is to identify a working optical path between two or more network elements, and an intra-node connectivity where an optical path within a particular network element is verified, for example a drop path following a drop structure or an add path upstream of an add structure of a node. The processing module 26 further passes the result of processing to the identification module 24.

The identification module 24 can identify existing optical network elements 12 and their capabilities and corresponding available "primitives" or atomic functions available for configuration and/or control, based on network element family and/or network element type and/or network element version or other network element identifier. Additionally, it can identify routes between optical network elements 12, along optical fibers 14, and configuration scenarios useful for monitoring the functionality of the optical fiber elements 12. For example, the identification module 24 might search and identify an optical source, local for a node under test or on a remote network element, which is not under test, which can be used. Similarly, the identification module 24 can identify a receiver component from a network element being local to the network element under test or a remote receiver, located on a network element not being under test. For example, a drop path can be validated by detecting a light signal using a light detector on a remote node if no detector is present on the local node under test. Alternatively for an add connectivity test upstream of the add structure, a remote light source can be used if no light source is available in the local node under test.

The configuration module 22 can communicate with the optical network elements 12, via the communication channels 16. The configuration module 22 can configure and/or control individual optical network elements 12 to perform the available "primitives" or atomic functions resulting in generating a light signal, detecting receipt of a light signal, detecting loss of signal, creating a route through the optical network elements, directing a light signal, splitting a light signal, diverting a light signal, amplifying a light signal, measuring an optical power of a received light signal, reporting other measured or calculated measurement data from network element to the SDN controller, etc. Examples of "primitives" or atomic functions are functionality to turn on a laser source, tune up a laser source, turn off a laser source, establish intra-node connectivity, configure pump power, configure attenuation of an optical element, read data from sensors, etc. The SDN controller 20 can take advantage of basic configuration capabilities in the optical network elements to obtain network element specific information and/or control optical signal transmission, which in turn, can be used to generate a response in the optical network elements 12. For example, the optical network element 12 can process a received light signal by measuring the light signal power or by detecting whether a light signal is received or not. The optical network element 12 can generate respective information or response data and provide it to the SDN controller either by reusing the links 16-1, 16-n or by alternative links 15-1, ..., 15-n.

This information or response data, in the following referred to as monitoring data, is sent to or retrieved by the processing module 26 of the SDN controller 20 to derive information relating to the operating condition of one or more of the optical network elements 12, and/or the operating conditions of the fibers 14 involved in the test.

In one specific example, the following configuration scenario can be considered: Optical network element 12-1 is identified by identification module 24 as a first node or source node having a laser source. Optical network element 12-1 is coupled directly or indirectly to optical network element 12-2 which is identified by identification module 24 as a second node or node under test. Optical network element 12-2 comprises a wavelength selective switch (WSS), having an Add/Drop structure. Optical network element 12-2 is configured remotely by the configuration module 22 to forward any incoming light signal so that it passes through the local Drop structure and backwards to the Add structure to leave the optical network element at the same port where it entered. Optical network element 12-1, as the source node, is configured and triggered by the configuration module 22 to send a test light signal towards optical network element 12-2, as the node under test.

The SDN controller 20 has accurate information about the network frequencies being used or planned for use. The test signal can be send at a pre-determined frequency identified by the SDN controller as a frequency which is not currently used for the components involved, therefore allowing sending a test signal through an operating network while the same network is transporting different signals and data traffic, without affecting the operation of the network. Further, the frequency can be the same frequency as planned for future use but currently not being in use at the components under test. If both optical network elements 12-1 and 12-2 operate properly, i.e. as configured, the test light signal will travel from the source node to the node under test where it is returned to travel back to the source node, which can detect and process the returned test light signal to generate monitoring data. This allows monitoring a complete path for a light signal in both forward and reverse direction.

The monitoring data can be sent to or retrieved by the processing module 26 to determine information about the connectivity and operating condition of the node under test, i.e. the second optical network element 12-2 in this example. Connectivity and operating condition of further optical network elements can be verified in a similar way and the information concerning the connectivity and operating conditions of the optical network elements can be stored in the SDN controller 20. If the monitoring data is not as expected, or no connectivity is detected for the node under test, and alarm message can be generated by the SDN controller 20.

The above is just one example of deriving information relating to the operating condition of an optical network element, wherein this example can be modified in various ways. For example, a network element 12 may be both a source node for emitting a test light signal, and a node under test. If the source node is the node under test, a second optical element may be used to monitor whether the light emitted from the source node is received properly and/or has an expected characteristic. The second optical network element also may be used to return the light emitted from the source node back to the source node, wherein the returned light may be detected and analyzed at the source node.

The source node and the node under test may be coupled directly or indirectly via a number of additional optical network elements, wherein the intervening optical network elements can be configured by the configuration module 22 to direct the test light signal to the node under test. The optical network elements can be tested one at a time, or groups of optical network elements can be tested in combination. For example, when configuring a number of optical network elements to route a test light signal from a source node to a node under test, information relating to the operating conditions of one or more of the optical network elements can be derived in response to (i) the test light signal correctly arriving at the node under test; (ii) the test light signal arriving at a "wrong" optical network element, i.e. not at the node under test according to the configuration; (iii) a test light signal having a "wrong" characteristic, i.e. not as expected according to the configuration, arriving at the node under test; and (iv) the test light signal not arriving at any optical network element along the route from the source node to the node under test.

Further, instead of monitoring whether or not the test light signal arrives at the node under test, or in addition thereto, the test light signal received at the node under test or at a third optical network element can be analyzed with respect to further characteristics, such as optical light power, light spectrum, chromatic or polarization mode dispersion, etc., depending on the analyzing capability of the respective optical network element.

Whereas the connectivity and operating condition of an optical network element in an optical network, when the optical network element is in use in a channel, can be verified by verifying proper operation of the network, the present invention additionally enables verification also of those optical network elements which currently are not used in an operating channel, without requiring specialized measuring equipment in the optical network. For monitoring the optical network, the invention takes advantage of basic functionalities of the optical network elements which can be configured, triggered and controlled by the SDN controller. Response signals can be preprocessed in the optical network elements to derive information or monitoring data which are fed back to the SDN controller for evaluating connectivity and operating conditions of the optical network elements. The SDN controller hence can maintain an overall view of the software defined optical network, including knowledge on the connectivity and operating conditions of its optical network elements and optical paths. This information can be used in a path calculation element (not shown) for calculating and dynamically updating optimum routes for optical data traffic.

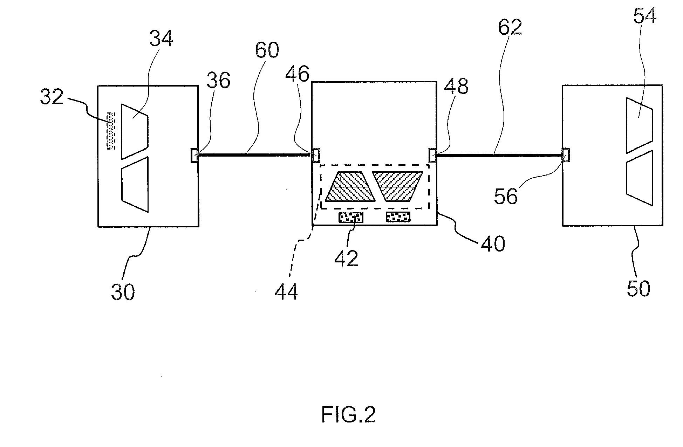

Fig. 2 shows a schematic block diagram of a number of optical network nodes and their connections. A first node 30 is embodied by an optical network element, including a laser light source as a transmitter 32, and further including an Add/Drop structure 34. The first node 30 has at least one optical port 36. The second node 40 includes a receiver 42 and an Add/Drop structure 44, and at least two optical ports 46, 48. A third node 50 comprises an Add/Drop structure 54 and at least one optical port 56. It also is possible to provide a laser source external to one or more of the nodes. The nodes 30, 40, 50 are connected via optical fibers 60, 62. Each one of the nodes. 30, 40, 50 can be connected to an SDN controller, such as controller 20, shown in fig. 1, via a wired or wireless data communication channel. As explained above, the controller can issue configuration commands to the nodes, e.g. to control the first node 30 to send a test light signal to the second node 40 which, in this example, is configured as a node under test. The SDN controller can configure the Add/Drop structure 44 of the second node 42, to return the test light signal back to the first node 30. The first node 30 can process the returned signal to generate monitoring data which is fed back to the SDN controller.

If the monitoring data indicates that the test light signal has been returned as expected, the SDN controller will recognize that the source node 30 and the node under test 40 are operating correctly and the respective connectivity and operating state can be confirmed and stored. If, just as an example, the test light signal is passed on to the third node 50, instead of being returned to the source node 30, the source node 30 and/or the third node 50 can generate monitoring data which indicate, to the SDN controller, that there is an error in the operation of the Add/Drop structure of the node under test 40. This information can be stored in the SDN controller, it can be used for calculating or updating an optimized route for transporting optical data packets through the optical network, and/or it can trigger an alarm message to an operator or a network management system. If, as another example, the test light signal is neither returned to the source node 30 nor passed on to the third node 50, the source node 30 and/or the third node 50 can generate monitoring data which, to the SDN controller, indicate that there is a loss of connectivity. This information can be stored in the SDN controller, it can be used for calculating or updating an optimized route for transporting optical data packets through the optical network, and/or it can trigger an alarm message to an operator or a network management system. If an error in the operating condition and/or connectivity of an optical element is detected and an alarm message is generated, this may prompt an operator to inspect the respective part of the optical network.

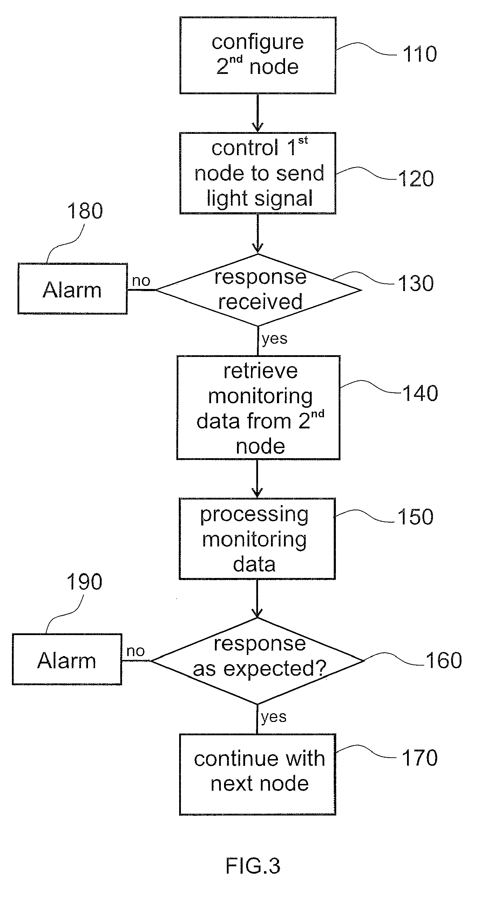

Fig. 3 shows a flow diagram of a method of monitoring a software defined optical network, according to one example. The network comprises at least a first optical node and a second optical node connected by an optical link, as illustrated in the figures 1 and 2, for example. In the example described, the first node can be configured as a source node, and the second node can be configured as a node under test. In other examples, the source node, i.e. the node committing a test light signal, can be the node under test. The method comprises remotely configuring the second node to actively monitor and generate a predetermined response to a test light signal sent by the first node when the second node receives the test light signal; see block 110. The method further comprises remotely controlling the first node to send the test light signal to the second node; see block 120. The second node is monitoring for a test signal from first node to generate a predetermined response. ; see block 130. If a response is received, the second node can process the received light signal to generate monitoring data which can be retrieved at the SDN controller from the second node, see block 140. The monitoring data can include information concerning the received light signal which has been processed or preprocessed at the second node. The monitoring data is processed at the SDN controller to derive information relating to the operating condition of at least one of the first node, the second node and an optical fiber link connecting first and second node; block 150. Processing of the monitoring data enables recognizing whether the response has been received as expected, whether a response has been an expected characteristic of property, or whether the has been a loss of signal. If the response is as expected, the node under test can be considered to operate properly, optical fiber links connecting first and second node being operational, and the process can continue with monitoring the next node and other links; see blocks 160 and 170. If the response is not as expected, this can indicate that there is a loss of signal, or that one of the optical network elements is not operating properly, or an optical link involved in the test is not operational at the predetermined frequency. In this case, an alarm can be triggered, see blocks 180 and 190. Additionally, based on each of the processing results, a database of the SDN controller can be updated to maintain an updated view of the operating condition and connectivity of the data network elements in real time. Further, based on the processing results, a path calculation unit can update or recalculate an optimum data path through the optical network. The alarm can be issued to an operator who can check operability of the optical networks elements in the field, if necessary. The alarm can be used to trigger reconfiguration of the node under test so that it provides the required connectivity under test.

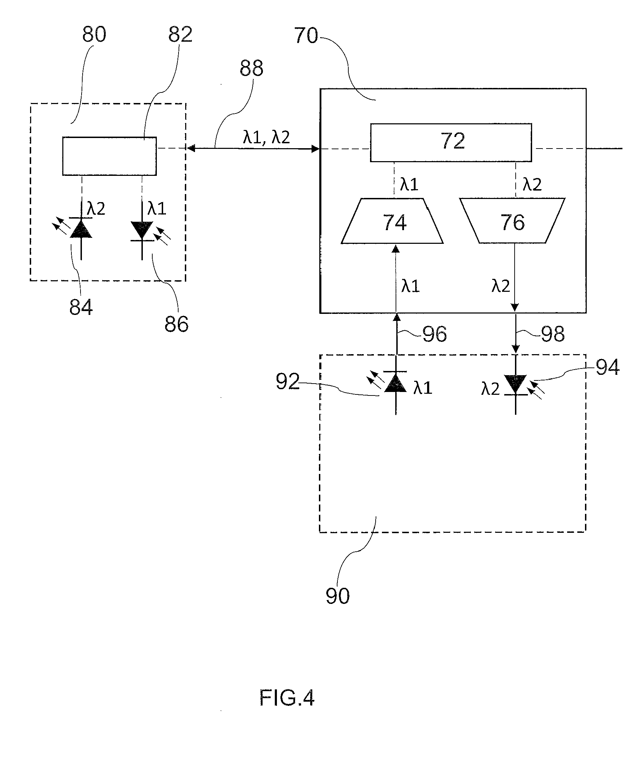

Fig. 4 shows an example of a setup for verifying optical connectivity between network elements and/or intra-node connectivity, where a light source and/or a light detector are implemented in a remote network element for a test scenario and in a route under test. In the example of fig. 4, and optical network element 70 is a node under test which is coupled to a further optical network element 80 and a remote optical network element 90. The network element 70 comprises a wavelength selective switch WSS 72, an add structure 74 and a drop structure 76. Further network element 80 comprises a wavelength selective switch WSS 82 (correct?), a light source 84 and a light detector 86. The light source 84 may comprise a laser diode, and the light detector 86 may comprise a photodetector. The remote optical network element 90 comprises a light source 92 and a light detector 94. Network element 70 and network element 80 are coupled via a optical link 88, and network element 70 and remote network element 90 coupled via optical links 96 and 98. The setup can be used for verifying the operating conditions of at least the network element under test 70 and the optical link 88 which, in this scenario, it is a route under test.

For testing the optical link 88 between network element 70 and network element 80, the light source 84 and the light detector 86 of network element 80 can be used to generate an optical signal λ2 which is send to the network element 70 (node under test) via WSS 82 where it is received at WSS 72 and forwarded to drop structure 76. The optical signal λ2 then can be received by detector 94 of the remote network element 90. If this test generates an expected result, i.e. an expected signal received at the remote network element 90, connectivity between network element 70 and network element 80 via the route under test 88 as well as proper operation of WSS 72 and drop structure 76 of the node under test 70 can be confirmed.

The setup of fig. 4 also can be used for testing the proper operation of the network element 70 (node under test) as a whole even when the network element 70 does not have a light source and/or light detector of its own. Light source 84 of network element 80 can be used to generate the optical signal λ2 which is passed through WSS 82, optical link 88, WSS 72, and drop structure 76 to light detector 94; and light a source 92 of network element 90 can be used to generate the optical signal λ1 which is passed to add structure 74, through WSS 72, optical link 88, WSS 82, and to light detector 86. These two test scenarios allow testing the connectivity of the local add/drop structure of the network element 70 (node under test), taking advantage of the light sources and light detectors of further network elements 80, 90 and the existing connectivity between the network elements via optical links 88, 96, and 98.

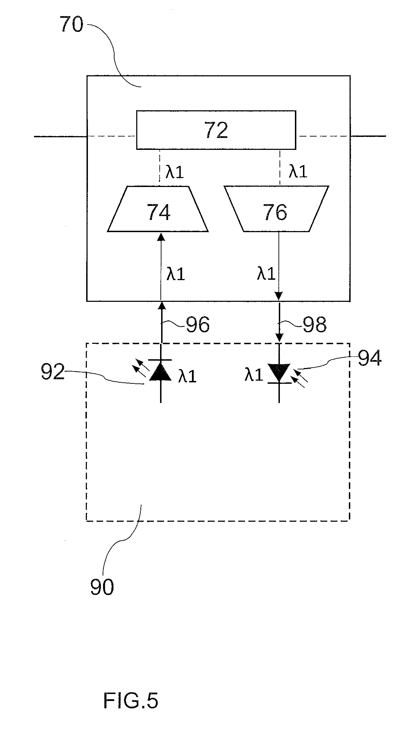

Fig. 5 shows an alternative set up, including only network element 70 (as the node under test) and the remote network element 90. Corresponding components are designated by the same reference numbers. The setup can be used for testing the connectivity and operation of the local add/drop structure of the network element 70 (node under test), for example. The light source 92 of the remote network element 90 generates a test light signal λ1 which is send it to the add structure 74 via optical link 96. WSS 72 is configured to receive the optical signal λ1 and to returned the signal λ1 to the local drop structure 76 from where it is passed to light detector 94 of remote network element 90 via optical link 98. This test scenario allows testing the intra-node connectivity and proper operation of the network element 70 (node under test) and, in particular, the proper operation of the local add/drop structure of the node under test.

All of network elements 70, 80, and 90 may be connected to an SDN controller, such as SDN controller 20 shown in fig. 1 and may be controlled as explained above. This may include the processing module 26 receiving a request for performing a test which may be a test for inter-node connectivity or intra-node connectivity, and passing the processing result to the identification module; the identification module identifying existing optical network elements and their capabilities, including available "primitives" or atomic functions, and further identifying available routes between optical network elements and configuration scenarios useful for monitoring the functionality of the optical element and routes; and the configuration module communicating with the optical network elements for configuring and/or controlling the optical network elements to perform the available "primitives" or atomic functions to perform the test. Optical network elements can generate corresponding information or response data which is passed back to the processing module 26 of the SDN controller 20 to derive information relating to the operating condition of one or more optical network elements and/or optical links involved in the test.

## Claims

1. A method of monitoring a software defined optical network, the optical network comprising a number of optical network nodes connected via optical links, the method including:
remotely controlling a first node to send a test light signal to a second node;
remotely configuring the second node to generate a predetermined response to the test light signal when the second node receives the test light signal;
detecting whether a response is received; and
processing the detection result to derive information relating to the operating condition of at least one of the first node and the second node.

2. The method of claim 1 wherein the first node is used as a source node and the second node is defined as a node under test; or wherein the first node is defined as a node under test.

3. The method of claim 1 or claim 2 wherein processing the detection result from second node drives information related to intra-node or inter-node connectivity.

4. The method of one of the preceding claims wherein the test light signal is send directly from first node to the second node or indirectly via a number of additional nodes.

5. The method of one of the preceding claims, wherein the predetermined response comprises at least part of the test light signal which is returned from the second node.

6. The method of one of the preceding claims, wherein the detected response is processed at the first node or at the second node and the information relating to the operating condition is retrieved by an SDN controller for further processing.

7. The method of claim 6, wherein the SDN controller processes the information relating to the operating condition and determines a status of at least one of the first node and the second node.

8. The method of one of the preceding claims, further comprising:
identifying an atomic function to determine an operating state of at least one of the first node and the second node and identifying at least one optical network node capable of performing the atomic function.

9. The method of claim 8, wherein the atomic function comprises at least one of generating a light signal, detecting receipt of a light signal, detecting loss of signal, creating a connection between two optical network elements, directing a light signal, splitting a light signal, diverting light signal, measuring an optical power of a received light signal.

10. The method of claim 8 or claim 9, wherein the at least one optical network node capable of performing the atomic function comprises an optical network element used in the optical network for communication of optical signals excluding dedicated measuring equipment.

11. The method of one of the preceding claims wherein the steps of controlling, configuring and processing are performed in a central SDN controller communicating with optical network elements at the optical nodes

12. A software defined optical network control system, comprising
an SDN controller in communication with a number of optical network elements connected by optical links, each optical network element located at a network node in communication with the SDN controller;
wherein the SDN controller comprises
a configuration module to issue configuration commands to the optical network elements, to control an optical network element located at a first node to send a test light signal from the first node to an optical network element located at a second node and to configure the optical element located at the second node to generate a predetermined response to the test light signal; and further comprises a processing module to receive and process from the optical network information relating to the operating condition of at least one of the optical network elements located at the first node and the second node, the information relating to the operating condition being generated based on the response.

13. The software defined optical network control system of claim 12,
wherein the SDN controller further comprises an identification module configured to identify optical network elements and their capabilities in the optical network; and/or
wherein the SDN controller further comprises a path calculation module configured to determine an optical signal path through the optical network based on the information received and processed in the processing module.

14. The software defined optical network control system of claim 12 or claim 13, wherein the SDN controller is configured to identify an atomic function to determine an operating condition and further identify at least one optical network element capable of performing the atomic function.

15. The software defined optical network control system of one of claims 11 to 14, wherein the second node comprises an optical wavelength selective switch, WSS, having an Add/Drop structure wherein cross connections of the WSS are configured remotely before sending the optical test signal.
